# EUROPEAN PATENT APPLICATION

(11) **EP 2 284 520 A1**
(43) Date of publication of application: **16.02.2011**
(21) Application number: 09382124.7
(22) Date of filing: 28.07.2009
(51) Int. Cl.: G01N 21/64, G01N 21/88, G01N 21/95, G01N 21/956, G01N 21/66

(54) **Assembly for the inspection in a continuous manner of cells, strings and photovoltaic modules and inspection method thereof**

(71) Applicant: Marcos Muntal, David, 08402 Granollers Barcelona (ES)
(72) Inventor: Marcos Muntal, David, 08402 Granollers Barcelona (ES)
(74) Representative: Martin Santos, Victoria Sofia

(57) **Abstract**

Assembly which enables the inspection in a continuous manner of photovoltaic modules, strings and cells, comprising a conveyor belt along which said elements run, a camera operating in TDI mode, and an equipment or computer for the evaluation of the images captured by the camera, wherein in case of only inspecting modules the assembly is further provided with a sensor which recognizes the position of terminals and two four-axis robots which move with the belt and connect to the photovoltaic module terminals; in case of inspecting photovoltaic cells the assembly is further provided with a light emission source. Thanks to this assembly and to the inspection method, a continuous inspection is attained, that is, in-line, without the need for the module or cell to stay at the rest position, which results in a faster inspection and cheaper final costs.

## Description

### OBJECT OF THE INVENTION

It is an object of the present invention an assembly for the inspection in a continuous manner of cells, strings and photovoltaic modules before the continuous rolling process, so that inspection of cells as well as solar modules is enabled before the in-line rolling process, that is, in a continuous manner without the need for stopping neither the cell nor the photovoltaic module.

The present invention is characterized by the special combination and configuration of the means employed in the inspection of cells, strings and modules so that a faster and hence more inexpensive inspection is enabled.

The present invention therefore pertains to the field of cells, strings and solar modules and particularly to the field of equipment employed in the inspection thereof once manufactured and before being assembled.

### BACKGROUND OF THE INVENTION

One of the known techniques for inspecting photovoltaic modules is by electroluminescence based on the injection of a current to the photovoltaic modules and analysis of the generated electroluminescent images.

One of the known patents in this field is EP1840541 in which a method for evaluating the performance of a solar cell having a silicon semiconductor as its main component is taught. This method comprises a step for the injection of a current into a solar module and a step for the detection by means of a camera of the luminescence emission pattern generated in the solar module, by this method, the photoelectric conversion performance of a solar cell can be evaluated with simple precision and without the need of large equipment.

Other companies are known such as Manz Automation in which equipment for the electroluminescence inspection of photovoltaic cells are detailed.

All known equipment for the electroluminescence inspection of photovoltaic modules are designed to inspect modules once they are finished, so if any faulty cell appears the problem will not be solved. Inspection is not performed in-line, but terminals for current injection are connected to the module terminals and subsequently the generated electroluminescent images are captured and analysed.

Another known technique for the inspection of photovoltaic cells is by photoluminescence which consists of the emission of a light on the excitation band of crystalline silicon with sufficient power and homogeneously enough on the whole cell surface, then an equipment for capturing the photoluminescence images simultaneously induced by the simultaneous and uniform incident lighting being provided on the cell semiconductor structure.

One of the best known patents in the art is patent with publication number US 2009051914 to Trupke and Bardos. This patent discloses the photovoltaic cells inspection technique by photoluminescence.

BT Imaging company is carrying out cell inspection by photoluminescence technique, but it also has the difficulty of having to carry out the inspection with the cell having to stay at the rest position, that is they are off-line inspection machines.

This inspection equipment, likewise the inspection based on electroluminescence has the same problem, the fact that inspection occurs at the rest position of the semiconductor structure to be analysed, which slows down the process and hence makes this more expensive.

It is therefore an object of the present invention to overcome the above disadvantages, for that developing an inspection assembly or apparatus as the one claimed, and which enables performing the inspection both of photovoltaic modules and cells in a continuous manner without them having to stay at the rest position to perform the required measurements.

### DESCRIPTION OF THE INVENTION

It is an object of the present invention an assembly for the inspection of photovoltaic cells, strings and modules in a continuous manner, that is, in-line. It essentially comprises a conveyor belt along which cells or modules run in a continuous mode, and associated with said belt it comprises a camera which operates in a continuous manner, based on TDI technology (Time Delay Integration), which enables the integration of the signal in n-lines. Data captured by the camera based on TDI technology are analysed by means of recognition software which analyses the image obtained from the camera and in case of detecting any anomaly in the photovoltaic cell or module a signal would be sent to put the module aside at the machine output.

TDI (Time Delay Integration): it is a scanning technology, in which a transfer device produces a continuous video image of a moving object through a number of linear matrixes aligned and synchronized with the movement of the object to be tested so that, as the image moves from one line to another, the integrated charge moves along with it, thus providing a higher resolution at the lowest light levels which is possible to achieve with an in-line scanning camera.

Additionally and depending on the elements to be inspected, that is, the photovoltaic modules or photovoltaic cells, the electroluminescence or photoluminescence technique will be employed, in which case the above assembly is complemented with elements specially designed and adapted to be able to apply said inspection technique and perform the same in a continuous manner.

In case of inspecting photovoltaic modules before them being laminated, electroluminescence will be the technique to be used, in which case the conveyor belt and the camera operating in a continuous manner are mounted in conjunction with an intelligent vision sensor which recognizes the position of the first connection terminal, once the whole module has completely entered the machine the intelligent vision sensor recognizes the position of the other connection terminal.

In addition to the intelligent vision sensor two four-axis robots are employed which will connect each of the terminals of the module, following the module movement on the belt. One of the robots would carry at its end the cable with one of the polarities, for example, the positive one, while the other robot would carry at its end the cable with the other polarity, the negative one or earth. Both cables will have a finishing so they can be appropriately connected to the module terminals, so that there is a good contact without too much pressure.

Once the final end of the module has passed by the inspection zone, the robot releases the connection terminals and stays at the waiting position for a new order from the intelligent vision sensor to connect to the next module.

In case of the elements to be inspected being cells, the conveyor belt, the camera operating in a continuous manner and the software elements, are complemented with some cell lighting means, the camera operating in a continuous manner being in charge of taking the photoluminescence images induced at the sample to be tested. The characteristic feature of the lighting source, and great advantage compared to Trupke and Bardos' invention, is that as detection is performed by means of a linear technology camera (not bidimensional), it is not necessary to completely uniformly illuminate the photovoltaic cell but illuminating one line of a width equal to that of said cell with enough power and uniformity would be sufficient. This would substantially cheapen the machine manufacturing cost.

### DESCRIPTION OF DRAWINGS

As a complement to the description below and to assist in a better understanding of its features, a set of plans are herein appended, in which figures, by way of example and not restrictively, the most significant details of the invention are depicted.

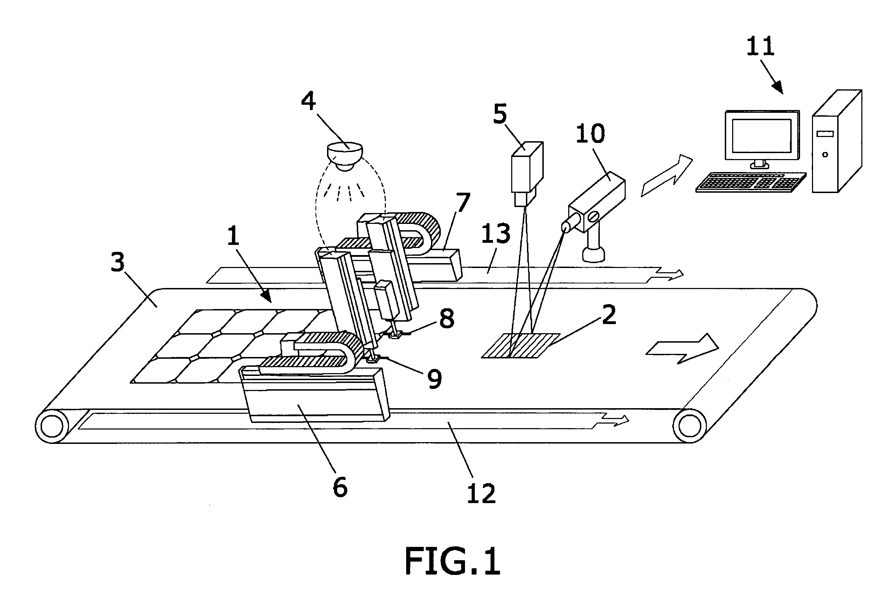

Figure 1 shows schematically the elements forming the assembly for the inspection in a continuous manner of photovoltaic cells or modules.

### PREFERRED EMBODIMENT OF THE INVENTION

In view of the figures a preferred embodiment of the invention proposed is described below.

In Figure 1, we can see the elements forming the assembly for the inspection in a continuous manner of photovoltaic modules (1) and cells (2) having as common elements for the inspection of both elements, a conveyor belt (3) on which photovoltaic modules (1) and cells (2) run in a continuous manner, without stopping at any time, even while inspection, also a camera (10) which operates in TDI mode, and an evaluation equipment or computer (11) and which in case of detecting a faulty module (1) or cell would put it aside the conveyor belt, for example by taking a derivation thereof.

In case of inspecting a photovoltaic module (1), since it is done on the basis of electroluminescence, the assembly is provided with a sensor (4) which recognizes the position of a terminal, for example (8) and subsequently the position of another terminal (9).

Once the positions of terminals (8) and (9) are recognized, robots (6) and (7) following the conveyor belt (3) movement, along tracks (12) and (13), each of the robots (6) and (7) will connect to the terminals (8) and (9) of the photovoltaic module (1), finally with a camera (10) which operates in a continuous mode the image projected by the module is captured, the image being sent to the evaluation equipment or computer (11). Since the module is moving the TDI camera transfer will have to be synchronized with the speed of the conveyor belt.

In a possible embodiment, robots (6) and (7) are four-axis cartesian robots.

In case of performing the inspection of photovoltaic cells (2), in addition to the elements which are common to the aforementioned inspection assembly, the assembly is provided with a light emission source (5) which projects on a photovoltaic cell (2) and where the luminescent pattern induced on the sample to be tested is captured by the camera (10) which operates in a continuous mode. Since the photovoltaic cell is moving the TDI camera transfer will have to be synchronized with the speed of the conveyor belt.

Therefore, the continuous mode inspection method of photovoltaic modules and cells consist of the following steps:
- Arranging on a conveyor belt a photovoltaic module or cell.
- Capturing the luminescence images emitted by the photovoltaic module or cell by means of a camera operating in TDI mode.
- Evaluating if the module or cell is faulty or not by an equipment or computer.

Now, in case of performing the inspection of a photovoltaic module the method is complemented with the following steps:
Upon arranging of the module (1) on the conveyor belt a sensor identifies the position of the two terminals (8) and (9).

Four-axis robots (6) and (7) moving together with the conveyor belt (3) along tracks (12) and (13) respectively, each connect to a terminal.

And it continues with the steps of capture by the camera operating in TDI mode and evaluation by a computer or the like.

In case of performing a photovoltaic cell inspection the method is complemented with the following steps:
Upon arranging of the cell (2) on the conveyor belt (3), a light source (5) projects a radiation on the cell, this radiation excites cell luminescence, it being captured by a camera (10) operating in TDI mode, and the image being evaluated by a computer (11).

The essence of this invention is not affected by variations in the materials, shape, size and arrangement of the component elements, described in a non limiting manner such that it allows its reproduction by an expert.

## Claims

1. An assembly for the inspection in a continuous manner of photovoltaic cells, strings and modules before them being laminated **characterised in that** it comprises:
- A conveyor belt (3) where modules (1) or cells (2) are arranged and run in a continuous mode.
- A camera (10) operating in TDI mode, which gathers the images projected by the module or the cell, where the transfer rate of the TDI camera is synchronized with the speed of the conveyor belt.
- An evaluation equipment or computer (11) which detects faulty modules and cells.

2. An inspection assembly according to claim 1 **characterised in that** in case of inspecting photovoltaic modules, the assembly is further provided with a sensor (4) which recognizes the position of terminals (8) and (9) of a photovoltaic module, it is also provided with robots (6) and (7) which follow the movement of conveyor belt (3), along tracks (12) and (13).

3. An inspection assembly according to claim 1 **characterised in that** in case of inspecting photovoltaic cells, the assembly is further provided with a light emission source (5) which projects on the photovoltaic cell (2).

4. An inspection assembly according to claim 2, **characterised in that** robots (6) and (7) are four-axis robots.

5. A continuous mode inspection method for photovoltaic modules and cells comprising the following steps:
- Arranging a photovoltaic module or cell on a conveyor belt.
- Capturing the luminescence images projected by the photovoltaic module or cell by a camera operating in TDI mode.
- Evaluating if the module or cell is faulty or not by an equipment or computer.

6. An inspection method according to claim 1 **characterised in that** in case of inspecting a photovoltaic module the method is complemented with the following steps:
- Upon arranging of module (1) on the conveyor belt a sensor identifies the position of the two terminals (8) and (9).
- Four-axis robots (6) and (7) moving together with conveyor belt (3) along tracks (12) and (13) respectively, each connect to a terminal.
- And it continues with the steps of capture by the camera operating in TDI mode and evaluation by a computer or the like.

7. An inspection method according to claim 1 **characterised in that** in case of inspecting a photovoltaic cell the method is complemented with the following steps:
Upon arranging of cell (2) on conveyor belt (3), a light emission source (5) projects a radiation on the cell, said radiation will excite the luminescence that is captured by a camera (10) which operates in TDI mode, and the image will be evaluated by a computer (11).
